# FASCICULE DE BREVET EUROPEEN

(11) **EP 1 235 138 B1**
(45) Date de publication et mention de la délivrance du brevet: **31.10.2018**
(21) Numéro de dépôt: 02290265.4
(22) Date de dépôt: 05.02.2002
(51) Int. Cl.: G06F 3/0481, G06F 3/0489

(54) **Dispositif de dialogue d'aéronef, pour dialoguer avec un système dudit aéronef**
Vorrichtung zum Kommunizieren mit einem System in einem Flugzeug
Device for communicating with an aircraft system

(30) Priorité: 26.02.2001 FR 0102566
(43) Date de publication de la demande: 28.08.2002
(73) Titulaire: AIRBUS OPERATIONS (SAS), 31060 Toulouse (FR)
(72) Inventeur: Roux, Nicolas, 31500 Toulouse (FR)
(74) Mandataire: Gevers & Orès

(56) Documents cités:
- FR-A- 2 743 921
- US-A- 5 666 499
- US-A- 6 057 786
- US-A- 6 072 473

## Description

La présente invention concerne un dispositif de dialogue entre au moins un opérateur d'un aéronef et au moins un système dudit aéronef, ledit système comprenant des fonctions susceptibles d'être déclenchées par ledit dispositif de dialogue, sous l'action de l'opérateur, en vue de leur exécution.

Dans le cadre de la présente invention :
- on entend par "exécution d'une fonction" notamment :
   - la mise en oeuvre d'une commande d'un élément (moteur, éclairage, ...) de l'aéronef ou d'une action particulière ;
   - la saisie de données ;
   - l'accès à des pages d'information sur un écran ; et/ou
   - l'accès à des informations ou des actions complémentaires sans changer de page ;
- ledit système, par exemple un dispositif de gestion de vol, peut comporter des "procédures" destinées à la navigation, à la communication, à la surveillance et/ou à la gestion du vol de l'aéronef, ainsi que des "procédures" destinées à la gestion d'éléments tels que les moteurs ou l'éclairage, ou d'alarmes dudit aéronef.

Le dialogue est réalisé par l'intermédiaire d'au moins une fenêtre qui est visualisée sur au moins un écran, généralement un écran du poste de pilotage, et qui est du type "interactif". Dans le cadre de la présente invention, on entend par "fenêtre interactive" une fenêtre qui comporte des objets sensibles (points, plages, valeurs alphanumériques, listes, menus, ...) qui sont associés respectivement à des fonctions particulières du type précité et qui sont sensibles à la présence d'un curseur. Ledit curseur peut être déplacé par un moyen approprié qui est actionnable par un opérateur de l'aéronef, de manière à pouvoir être amené sur un objet sensible afin de le désigner ou le marquer. Lorsqu'un objet sensible est désigné, c'est-à-dire lorsque le curseur est amené sur lui, ledit objet sensible est marqué ou mis en évidence, en particulier par un changement d'apparence tel qu'un changement de couleur ou une surbrillance par exemple. On dit que ledit objet sensible est alors muni d'un "marqueur d'objet" ou "focus".

La validation (à l'aide d'un moyen approprié actionnable) d'un objet sensible qui est muni d'un tel marqueur d'objet déclenche l'exécution de la fonction qui est associée audit objet sensible.

On connaît différents dispositifs de dialogue susceptibles de réaliser la désignation et la validation d'un objet sensible de ce type.

En particulier, par le brevet FR-2 677 149, on connaît un dispositif pour la révision du plan de vol latéral d'un aérodyne. Ce dispositif connu comprend un dispositif de désignation muni d'un organe de validation, qui est couplé au processeur du système de gestion de vol de l'aérodyne de manière à obtenir sur l'écran de ce système, en plus de la représentation géographique du plan de vol initialement sélectionné par le pilote :
- une zone sensible associée à chaque point de l'écran ;
- des plages de fonction dynamiques servant à composer des menus, la fonction attribuée à chacune de ces plages pouvant varier d'un menu à l'autre et étant indiquée sur l'afficheur en correspondance avec cette plage ; et
- un index lumineux dont les déplacements sur l'écran sont commandés par une action du pilote sur le dispositif de désignation, de manière à pouvoir amener l'index sur une plage ou une zone sensible, l'activation de la fonction correspondante à cette plage ou la sélection d'un point de ladite zone étant obtenue par une action du pilote sur l'organe de validation.

En outre, par le brevet FR-2 743 921, on connaît un dispositif d'aide à la navigation aérienne d'un avion, qui fait partie d'un système global de contrôle de l'avion. Ce système comporte notamment un système de gestion de vol du type FMS ("Flight Management System") et des interfaces de dialogue avec le pilote qui comprennent, entre autres, des écrans d'affichage d'informations de navigation et de pilotage et une console d'affichage et d'entrée de données du type MCDU ("Multipurpose Control Display Unit"). Cette console MCDU comporte un clavier exclusivement destiné à entrer des données, un écran et des moyens permettant de sélectionner des zones affichées sur l'écran et d'activer la zone sélectionnée pour déclencher des opérations qui sont en rapport avec ce qui est affiché. Ces moyens de sélection et d'activation permettent :
- de déplacer un curseur dans un menu affiché sur l'écran pour sélectionner une zone proposée par ce menu, zone qui passe par exemple en surbrillance lors du passage du curseur sur cette zone ; et
- d'activer une zone sélectionnée.

Les fonctions déclenchées de cette manière (désignation de l'objet sensible associé et validation) par le dispositif de dialogue sont généralement des fonctions prévues à l'avance et réalisées à un moment particulier pendant, avant ou après le vol.

Toutefois, il peut arriver au cours du vol (ou même avant ou après le vol) que l'équipage d'un aéronef soit obligé de réaliser, parfois de façon impérative, des actions particulières, c'est-à-dire soit obligé de faire exécuter des fonctions particulières, qui ne peuvent pas être anticipées. Ceci est en général le cas lorsque le pilote est alerté par différents systèmes de l'aéronef d'un changement dans la situation opérationnelle dudit aéronef, qui requiert un traitement rapide de sa part, par exemple le traitement d'une panne ou la génération d'une réponse à un message ATC ("Air Trafic Control").

Or, au moment où une telle demande de traitement est faite, il est possible que le pilote soit en train de faire exécuter une autre fonction habituelle ou non, le curseur ayant été amené à cet effet sur la fenêtre correspondante.

Dans une telle situation, avec les dispositifs de dialogue divulgués par les brevets FR-2 677 149 et FR-2 743 921 précités, le pilote a deux possibilités :
- soit il interrompt la fonction en cours d'exécution et déplace son curseur vers la fenêtre contenant la nouvelle fonction (par exemple une fonction d'urgence) afin de désigner et valider l'objet sensible associé à cette nouvelle fonction ;
- soit il attend pour déclencher la nouvelle fonction que la fonction en cours soit complètement exécutée.

Aucune de ces deux possibilités n'est bien entendu satisfaisante.

On notera que, dans le cas d'un dispositif de dialogue, tel que celui décrit dans le document US-6 112 141, comportant deux dispositifs de déplacement de curseur susceptibles de commander chacun un curseur et destinés à deux opérateurs différents (au pilote et au copilote de l'aéronef par exemple), la fonction d'urgence peut être déclenchée par l'opérateur qui ne commande pas la fonction en cours d'exécution, dans le cas bien entendu où cet opérateur ne commande aucune fonction.

Ledit document US-6 112 141 décrit un poste de pilotage qui comporte notamment une pluralité d'écrans, une unité de contrôle multi-fonctionnelle, deux claviers (ou des systèmes vocaux) exclusivement destinés à entrer des données, et une interface de dialogue. Cette interface de dialogue comprend au moins deux dispositifs de commande de curseur identiques, sous forme de boules ou sphères de commande, dont l'un est destiné au pilote et l'autre au copilote. Ces boules de commande permettent de déplacer en continu les curseurs correspondants sur les écrans pour désigner des objets sensibles. De plus, dans le cas où deux curseurs différents désignent le même objet sensible, c'est la commande du curseur ayant réalisé le premier la désignation qui prévaut, aucune priorité n'étant prévue entre les différents opérateurs.

Toutefois, dans le cas où les deux opérateurs sont tous les deux en train de faire exécuter des fonctions par l'intermédiaire de leur dispositif de dialogue ou dans le cas où l'un des deux est occupé à d'autres tâches, si une fonction d'urgence doit être exécutée, on se retrouve dans la même situation que précédemment, avec le même dilemme, à savoir soit interrompre la fonction en cours et faire exécuter la fonction d'urgence, soit terminer la fonction en cours avant de faire exécuter la fonction d'urgence.

Par ailleurs :
- par le document US-6 057 786, on connaît un dispositif de dialogue pour un aéronef, qui comprend une pluralité d'écrans et deux dispositifs de déplacement de curseur, dont l'un est destiné au pilote de l'aéronef et l'autre au copilote ; et
- par le document US-5 666 499, on connaît une interface graphique comprenant deux dispositifs de commande de curseur qui sont susceptibles d'être actionnés par un seul et même opérateur et qui sont destinés à commander deux curseurs différents.

La présente invention concerne un dispositif de dialogue du type décrit précédemment, qui permet de remédier aux inconvénients précités.

A cet effet, selon l'invention, ledit dispositif de dialogue entre au moins un opérateur d'un aéronef et au moins un système dudit aéronef, ledit dispositif de dialogue comportant :
- au moins un écran susceptible de visualiser au moins deux objets sensibles, chacun desdits objets sensibles étant associé à l'une d'une pluralité de fonctions, lesdites fonctions étant susceptibles d'être déclenchées par ledit dispositif de dialogue sous l'action de l'opérateur en vue de leur exécution, ledit écran étant susceptible de visualiser au moins deux objets sensibles sur au moins deux fenêtres interactives ; et
- au moins un dispositif de commande de curseur qui est agencé de manière à pouvoir être actionné par ledit opérateur et qui comprend au moins :
   ▪ un moyen de déplacement actionnable, susceptible de déplacer un curseur sur une fenêtre interactive de manière à désigner un objet sensible en faisant apparaître un marqueur principal d'objet ; et
   ▪ un moyen de validation actionnable, susceptible de valider un objet sensible qui est muni dudit marqueur principal d'objet de manière à faire exécuter la fonction qui est associée audit objet sensible,
est remarquable en ce que :
- ledit dispositif comporte, de plus, des moyens de commande auxiliaires qui sont agencés de manière à pouvoir également être actionnés par ledit opérateur, qui sont destinés à commander un marqueur auxiliaire d'objet, sans agir sur la commande dudit marqueur principal d'objet, et qui comprennent :
   ▪ au moins un élément de déplacement actionnable, permettant d'engendrer un déplacement discret dudit marqueur auxiliaire d'objet, objet sensible par objet sensible, sur une fenêtre interactive ; et
   ▪ au moins un élément de validation actionnable, permettant de valider l'un desdits objets sensibles, qui est muni dudit marqueur auxiliaire d'objet, de manière à faire exécuter la fonction associée audit objet sensible ;
- ledit dispositif de commande de curseur et lesdits moyens de commande auxiliaires sont formés de sorte que :
   ▪ un objet sensible d'une fenêtre interactive qui est muni du marqueur auxiliaire d'objet peut être validé par l'intermédiaire de l'élément de validation desdits moyens de commande auxiliaires et la fonction qui lui est associée peut donc être exécutée, si le marqueur d'objet principal ne se trouve pas sur cette fenêtre interactive ; et
   ▪ lorsque le marqueur principal d'objet est amené sur une fenêtre interactive sur laquelle se trouve le marqueur auxiliaire d'objet, la commande du marqueur principal d'objet, engendrée par ledit dispositif de commande de curseur, est prioritaire par rapport à la commande du marqueur auxiliaire d'objet, engendrée par lesdits moyens de commande auxiliaires de sorte que le marqueur auxiliaire d'objet disparaît.

Ainsi, lorsque lors de l'exécution d'une fonction particulière (qui a été commandée de façon usuelle par la désignation et la validation d'un objet sensible par l'intermédiaire dudit dispositif de commande de curseur commandant le curseur), une autre fonction, notamment une fonction d'urgence, doit être exécutée, l'opérateur (qui accède à la fois audit dispositif de commande de curseur et aux moyens de commande auxiliaires) peut déclencher l'exécution de cette autre fonction par l'intermédiaire desdits moyens de commande auxiliaires, puisque le marqueur auxiliaire d'objet qui est commandé par ces derniers n'agit pas sur la commande réalisée par l'intermédiaire du curseur et du marqueur principal d'objet.

Par conséquent, la seconde fonction (fonction d'urgence par exemple) peut être exécutée sans que l'on ait pour autant à interrompre l'exécution en cours de la première fonction (fonction usuelle prévue à l'avance par exemple), les deux exécutions étant commandées par le même opérateur.

En outre, comme le marqueur auxiliaire d'objet est soumis à un déplacement discret, un tel déplacement discret pouvant être mis en oeuvre de façon précise en toute situation, en particulier lors de secousses de l'aéronef, l'exécution d'une fonction d'urgence peut, grâce à l'invention, être réalisée quelles que soient la phase de vol et/ou les conditions de vol, et notamment lorsque l'aéronef se trouve dans une zone de turbulences.

Dans un mode de réalisation préféré, lesdits moyens de commande auxiliaires sont montés dans un boîtier spécifique séparé, qui est muni de touches, et lesdits éléments de déplacement et de validation (pour commander le marqueur auxiliaire d'objet) sont des touches de ce boîtier spécifique.

Dans un autre mode de réalisation, lesdits éléments de déplacement et de validation des moyens de commande auxiliaires (pour commander le marqueur auxiliaire d'objet) peuvent être des touches d'un clavier usuel permettant audit opérateur d'entrer des données.

De plus, dans une variante particulière, pour réduire l'encombrement, ledit dispositif de commande de curseur n'est pas un dispositif indépendant, mais il est également formé par une partie des touches dudit clavier. Ainsi, dans ce cas, ledit (seul) clavier sert simultanément :
- à l'entrée de données dans le système ;
- à la commande du marqueur auxiliaire d'objet ; et
- à la commande du curseur (c'est-à-dire du marqueur principal d'objet).

Pour ce faire, des ensembles différents de touches du clavier sont simplement utilisés pour réaliser, respectivement, les différentes tâches.

Par ailleurs, pour faciliter la désignation d'objets sensibles, dans un mode de réalisation avantageux, lesdits objets sensibles sont agencés selon au moins une direction déterminée sur ladite fenêtre interactive, par exemple verticalement ou horizontalement, et lesdits moyens de commande auxiliaires comportent au moins un élément de déplacement qui correspond à une flèche de direction permettant de déplacer le marqueur auxiliaire d'objet d'un objet sensible à un autre, objet sensible après objet sensible, suivant ladite direction déterminée selon un sens choisi.

Dans un premier mode de réalisation, ledit dispositif de commande de curseur engendre, de façon usuelle, un déplacement continu du curseur sur la fenêtre interactive, tandis que, dans un second mode de réalisation, ledit dispositif de commande de curseur engendre, également de façon usuelle, un déplacement discret du curseur sur la fenêtre interactive.

Par ailleurs, pour apporter une grande souplesse d'utilisation et augmenter le confort de l'opérateur dans l'exécution de ses tâches, le dispositif de dialogue conforme à l'invention peut comporter deux dispositifs de commande de curseur qui sont agencés de manière à pouvoir être actionnés tous les deux par ledit opérateur, l'un desdits dispositifs de commande de curseur engendrant un déplacement continu du curseur et l'autre un déplacement discret dudit curseur.

En outre, avantageusement, ledit dispositif de commande de curseur comporte un moyen pour déplacer le curseur de fenêtre à fenêtre et, lorsque le dispositif de dialogue comporte au moins deux écrans, un moyen pour déplacer le curseur d'écran à écran. De préférence, chaque fenêtre comporte une pluralité de zones et le déplacement du curseur est réalisé de zone à zone de sorte que le déplacement d'une première fenêtre à une seconde fenêtre est obtenu indirectement par le déplacement du curseur de la dernière zone de la première fenêtre à la première zone de la seconde fenêtre.

Dans un mode de réalisation préféré, ledit dispositif de dialogue comporte deux dispositifs de commande de curseur et deux ensembles de moyens de commande auxiliaires, un dispositif de commande de curseur et un ensemble de moyens de commande auxiliaires étant destinés au pilote de l'aéronef, et l'autre dispositif de commande de curseur et l'autre ensemble de moyens de commande auxiliaires étant destinés au copilote de l'aéronef.

La présente invention concerne également un système d'aéronef tel que précité, qui est remarquable en ce qu'il comporte ledit dispositif de dialogue conforme à l'invention, pour permettre un dialogue avec un opérateur, en particulier un pilote, dudit aéronef.

Les figures du dessin annexé feront bien comprendre comment l'invention peut être réalisée. Sur ces figures, des références identiques désignent des éléments semblables.

La figure 1 est le schéma synoptique d'un dispositif de dialogue conforme à l'invention, qui est associé à un système d'un aéronef.

La figure 2 représente schématiquement un clavier d'un dispositif de dialogue conforme à l'invention.

La figure 3 montre un ensemble de touches de clavier, utilisées pour la commande d'un marqueur auxiliaire.

Les figures 4 et 5 montrent schématiquement des fenêtres actives munies d'objets sensibles permettant d'expliquer le mode de commande prioritaire prévu selon la présente invention.

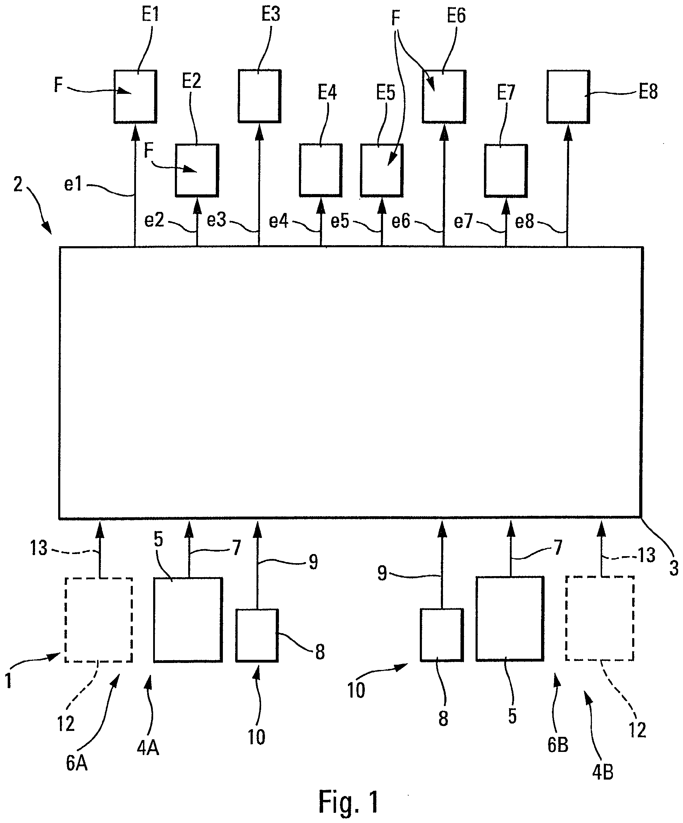

Le dispositif de dialogue 1 conforme à l'invention et représenté schématiquement sur la figure 1 est embarqué sur un aéronef, en particulier un avion de transport civil, non représenté et est, de préférence, agencé dans le poste de pilotage dudit aéronef. Ce dispositif de dialogue 1 est destiné à permettre le dialogue entre au moins un opérateur de l'aéronef, notamment un pilote, et un système connu, par exemple un système de gestion de vol non représenté.

Le dispositif de dialogue 1 est associé à un ensemble 2 qui comporte un calculateur 3 et une pluralité d'écrans E1 à E8 qui sont reliés, respectivement par l'intermédiaire de liaisons e1 à e8, audit calculateur 3.

Dans le mode de réalisation préféré (mais non exclusif) représenté sur la figure 1, l'ensemble 2 est en partie dédoublé, une partie dudit système étant destinée au pilote, la partie gauche 4A par exemple, et l'autre partie (partie droite 4B) étant destinée au copilote. Avec une telle répartition, de préférence, les écrans E1 à E3 sont destinés au pilote, les écrans E6 à E8 au copilote et les écrans E4 et E5 sont communs aux deux.

Les écrans E1 à E8 qui sont du type connu LCD à cristaux liquides ("Liquid Crystal Display") comportent chacun au moins une fenêtre de visualisation F.

Chacune desdites fenêtres de visualisation F est une fenêtre dite "interactive", c'est-à-dire une fenêtre qui comporte des objets sensibles (points, plages, valeurs alphanumériques, listes, menus, ...) qui peuvent être désignés ou marqués par un marqueur d'objet [marqueur principal (d'objet) M1, marqueur auxiliaire (d'objet) M2], chacun desdits objets sensibles OS étant associé à une fonction particulière. L'apparition du marqueur principal M1 sur un objet sensible OS peut être engendrée par l'intermédiaire de la commande d'un curseur CU qui peut être déplacé par un dispositif de commande de curseur 5. Le dispositif de dialogue 1 comporte deux dispositifs 5 identiques, dont l'un fait partie d'un ensemble de commandes 6A du pilote et l'autre fait partie d'un ensemble de commandes 6B du copilote. Lesdits dispositifs de commande de curseur 5 sont reliés par l'intermédiaire de liaisons 7 au calculateur 3.

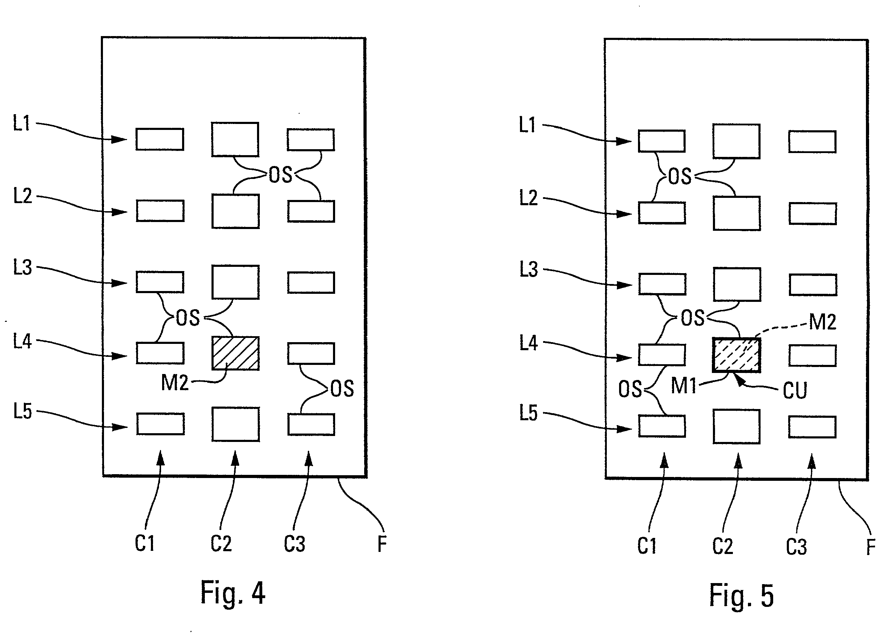

L'actionnement d'un desdits dispositifs 5 permet de déplacer ledit curseur CU de manière à l'amener sur un objet sensible OS afin de le désigner, c'est-à-dire afin de faire apparaître le marqueur principal M1, comme représenté sur la figure 5. Lorsqu'un objet sensible OS est désigné par l'intermédiaire du curseur CU, il est donc marqué ou mis en évidence, en particulier par un changement d'apparence tel qu'un changement de couleur ou une surbrillance par exemple. Le changement d'apparence correspondant au marqueur principal M1 est illustré par un contour plus épais de l'objet sensible OS sur la figure 5. L'exécution d'une fonction associée à un objet sensible OS est déclenchée par la validation (à l'aide d'un dispositif 5) dudit objet sensible OS préalablement désigné par ledit curseur CU (c'est-à-dire muni dudit marqueur principal M1).

Selon l'invention, ledit dispositif de dialogue 1 comporte, de plus, des moyens de commande auxiliaires 8, qui sont reliés par une liaison 9 au calculateur 3, qui sont agencés de manière à pouvoir également être actionnés par ledit opérateur, qui sont destinés à commander le marqueur auxiliaire M2, sans agir sur la commande dudit marqueur principal M1, et qui comprennent à cet effet :
- au moins un élément de déplacement actionnable, précisé ci-dessous, permettant d'engendrer un déplacement discret dudit marqueur auxiliaire M2, objet sensible OS par objet sensible OS, sur une fenêtre interactive F ; et
- au moins un élément de validation actionnable précisé ci-dessous, permettant de valider un objet sensible OS qui est muni dudit marqueur auxiliaire M2 de manière à faire exécuter la fonction associée audit objet sensible OS.

Dans l'exemple représenté sur la figure 1, chaque ensemble de commandes 6A et 6B comporte de tels moyens de commande auxiliaires 8.

Ainsi, lorsque lors de l'exécution d'une fonction particulière (qui a été commandée de façon usuelle par la désignation et la validation d'un objet sensible OS par l'intermédiaire dudit dispositif de commande de curseur 5 commandant le curseur CU), une autre fonction, par exemple une fonction d'urgence, doit être exécutée, un opérateur (le pilote ou le copilote) qui accède à la fois audit dispositif de commande de curseur 5 et aux moyens de commande auxiliaires 8, peut déclencher l'exécution de cette seconde fonction par l'intermédiaire desdits moyens de commande auxiliaires 8 sans conséquence sur la fonction en cours d'exécution, puisque le marqueur auxiliaire M2 qui est commandé par ces derniers n'agit pas sur la commande réalisée par l'intermédiaire du curseur CU.

Par conséquent, la seconde fonction (fonction d'urgence par exemple) peut être exécutée sans que l'on ait pour autant à interrompre l'exécution en cours de la première fonction (fonction usuelle prévue à l'avance par exemple), les deux exécutions étant commandées par le même opérateur.

En outre, comme le marqueur auxiliaire M2 est soumis à un déplacement discret, un tel déplacement discret pouvant être mis en oeuvre de façon précise en toute situation, en particulier lors de secousses de l'aéronef, l'exécution d'une fonction d'urgence peut, grâce à l'invention, être réalisée quelles que soient la phase de vol et/ou les conditions de vol, et notamment lorsque l'aéronef se trouve dans une zone de turbulences.

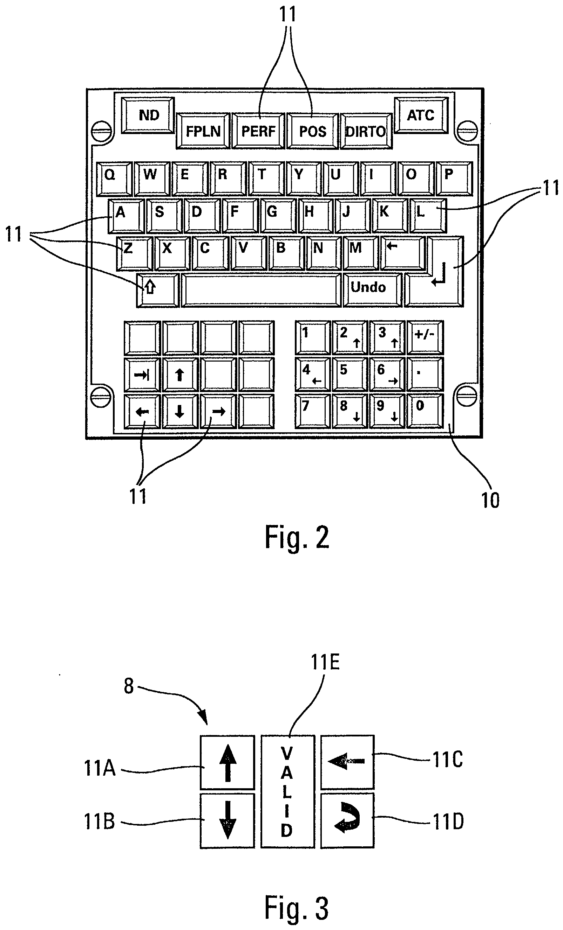

Dans un mode de réalisation préféré, les moyens de commande auxiliaires 8 comportent des touches 11A à 11D montrées sur la figure 3 qui font partie d'un boîtier spécifique séparé, non représenté.

Chacun desdits ensembles de commande 6A, 6B comporte de plus un clavier usuel 10 représenté sur la figure 2, qui comporte des touches 11 permettant à un opérateur d'entrer des données alphanumériques dans ledit calculateur 3.

Aussi, dans un mode de réalisation particulier, les moyens de commande auxiliaires 8 comportent des touches 11A à 11D, dont certaines (par exemple les touches 11A, 11B et 11C dans l'exemple des figures 2 et 3) ou même toutes, font partie dudit clavier 10. Ainsi, il n'est pas nécessaire de prévoir de boîtier indépendant pour mettre en oeuvre la présente invention, c'est-à-dire pour former les moyens de commande auxiliaires 8 destinés à commander le marqueur auxiliaire M2.

Dans l'exemple représenté sur la figure 3 :
- les touches 11A à 11C représentent des éléments de déplacement, c'est-à-dire elles sont destinées au déplacement du marqueur auxiliaire M2 sur une fenêtre interactive F ;
- la touche 11D sert à amener ledit marqueur auxiliaire M2 d'un écran à un autre écran, de préférence de façon cyclique. Elle peut également être utilisée pour amener ledit marqueur auxiliaire M2 d'une fenêtre F à une autre fenêtre F dans le cas où un écran comporte plus d'une fenêtre ; et
- la touche 11E représente ledit élément de validation.

Selon l'invention, on dispose sur au moins certaines des fenêtres F les objets sensibles OS de manière adaptée aux touches des moyens de commande auxiliaires 8 (quelles qu'elles soient : touches d'un boîtier spécifique ou touches particulières 11 du clavier 10), que l'on utilise au déplacement discret dudit marqueur auxiliaire M2, d'un objet sensible OS à un autre.

Dans l'exemple des figures 4 et 5, les objets sensibles OS sont disposés en colonnes C1 à C3 et en lignes L1 à L5 de sorte que les touches à flèche de direction "←", "↑", "↓" et "→" suffisent pour commander le déplacement du marqueur auxiliaire M2.

Si les objets sensibles OS sont disposés suivant une seule direction (ligne ou colonne), deux touches peuvent suffire, par exemple les touches "←" et "→" en cas de disposition en ligne et les touches "↑" et "↓" en cas de disposition en colonne, ce qui permet de faciliter la commande de déplacement du marqueur auxiliaire M2.

Selon l'invention, pour chaque ensemble de commandes 6A, 6B, ledit dispositif de commande de curseur 5 et lesdits moyens de commande auxiliaires 8 sont formés de sorte que la commande du marqueur principal M1, engendrée par ledit dispositif de commande de curseur 5, est prioritaire par rapport à la commande du marqueur auxiliaire M2, engendrée par lesdits moyens de commande auxiliaires 8, lorsque les deux marqueurs principal et auxiliaire se trouvent sur une même fenêtre interactive F, comme on peut le voir sur les figures 4 et 5, ce qui permet de simplifier l'utilisation de ces deux moyens de commande 5 et 8.

Sur la figure 4, l'objet sensible OS qui est situé à la position C2-L4 est muni du marqueur auxiliaire M2 (illustré par des hachures). Cet objet sensible OS peut ainsi être validé par l'intermédiaire du moyen de validation 11E des moyens de commande auxiliaires 8, et la fonction qui lui est associée peut donc être exécutée.

Le curseur CU ne se trouve pas sur cette fenêtre interactive F.

Lorsque l'on amène le curseur CU sur cette fenêtre interactive F, par exemple de manière à désigner l'objet sensible OS situé à la position C2-L4, le marqueur principal M1 apparaît sur cet objet sensible OS et le marqueur auxiliaire M2 disparaît, bien qu'il n'ait pas été déplacé [pour illustrer cette situation, la présence (non active) dudit marqueur auxiliaire M2 est indiquée par l'intermédiaire de hachures en traits interrompus].

De plus, si le curseur CU, et donc le marqueur principal M1, quittent de nouveau cette fenêtre interactive F, le marqueur auxiliaire M2 réapparaît, s'il n'a pas été déplacé entre-temps bien entendu, et on peut alors l'utiliser pour activer la fonction associée à l'objet sensible OS de cette position C2-L4.

Selon l'invention, le dispositif de commande de curseur 5 est un dispositif qui comporte, de façon usuelle, des moyens non représentés, permettant :
- de déplacer le curseur CU sur une fenêtre interactive F de manière à désigner un objet sensible OS ;
- de déplacer ledit curseur CU d'écran à écran et/ou de fenêtre à fenêtre ; et
- de valider un objet sensible OS qui est désigné par l'intermédiaire du curseur CU de manière à faire exécuter la fonction qui est associée audit objet sensible OS.

Selon l'invention, dans un premier mode de réalisation, ledit dispositif de commande de curseur 5 est formé de manière à engendrer, de façon usuelle, un déplacement continu du curseur CU sur la fenêtre interactive F, tandis que, dans un deuxième mode de réalisation, ledit dispositif de commande de curseur 5 est formé de manière à engendrer, également de façon usuelle, un déplacement discret du curseur CU sur la fenêtre interactive F.

Dans ce deuxième mode de réalisation, dans une variante préférée, ledit dispositif 5 pour commander le curseur CU n'est pas un dispositif spécifique, mais il est simplement formé d'une partie des touches 11 du clavier 10.

Dans ce cas, ledit clavier 10 peut servir simultanément :
- à l'entrée de données dans le système 1 ;
- à la commande du marqueur principal M1 ; et
- à la commande du marqueur auxiliaire M2.

Pour ce faire, des groupes différents de touches 11 du clavier 10 sont simplement utilisés pour réaliser respectivement ces différentes tâches.

Par ailleurs, dans un troisième mode de réalisation, chaque ensemble de commandes 6A, 6B comporte, en plus du dispositif de commande de curseur 5, un autre dispositif de commande de curseur 12 qui est relié par l'intermédiaire d'une liaison 13 audit calculateur 3, comme représenté en traits interrompus sur la figure 1, et qui permet également de commander (désigner et valider) ledit curseur CU.

Dans ce cas, chacun des opérateurs (pilote, copilote) a à sa disposition deux dispositifs 5 et 12 pour commander le curseur CU, de sorte qu'en cas de panne de l'un de ses dispositifs 5, 12 de commande, il peut toujours utiliser l'autre dispositif de commande pour faire exécuter des fonctions, ce qui augmente bien entendu la fiabilité dudit dispositif de dialogue 1.

De préférence, l'un desdits dispositifs 5 et 12 est formé de manière à engendrer un déplacement discret du curseur CU et l'autre de manière à engendrer un déplacement continu dudit curseur CU. Comme chaque opérateur (pilote, copilote) a ainsi à sa disposition deux dispositifs de commande complémentaires 5 et 12, mais différents l'un de l'autre, il peut choisir celui qui lui convient le mieux (soit pendant tout le vol, soit de façon temporaire en fonction des phases et/ou des conditions de vol) pour commander le curseur CU, ce qui apporte une grande souplesse d'utilisation et augmente le confort desdits pilote et copilote dans l'exécution de leurs tâches.

## Revendications

1. Dispositif de dialogue entre au moins un opérateur d'un aéronef et au moins un système dudit aéronef, ledit dispositif de dialogue (1) comportant :
- au moins un écran (E1 à E8) susceptible de visualiser au moins deux objets sensibles (OS), chacun desdits objets sensibles (OS) étant associé à l'une d'une pluralité de fonctions, lesdites fonctions étant susceptibles d'être déclenchées par ledit dispositif de dialogue (1) sous l'action de l'opérateur en vue de leur exécution, ledit écran (E1 à E8) étant susceptible de visualiser au moins deux objets sensibles (OS) sur au moins deux fenêtres interactives (F) ; et
- au moins un dispositif de commande de curseur (5, 12) qui est agencé de manière à pouvoir être actionné par ledit opérateur et qui comprend au moins :
▪ un moyen de déplacement actionnable, susceptible de déplacer un curseur (CU) sur une fenêtre interactive (F) de manière à désigner un objet sensible (OS) en faisant apparaître un marqueur principal d'objet (M1) ; et
▪ un moyen de validation actionnable, susceptible de valider un objet sensible (OS) qui est muni dudit marqueur principal d'objet (M1) de manière à faire exécuter la fonction qui est associée audit objet sensible (OS),
**caractérisé en ce que** :
- ledit dispositif comporte, de plus, des moyens de commande auxiliaires (8) qui sont agencés de manière à pouvoir également être actionnés par ledit opérateur, qui sont destinés à commander un marqueur auxiliaire d'objet (M2), sans agir sur la commande dudit marqueur principal d'objet (M1), et qui comprennent :
▪ au moins un élément de déplacement (11A à 11C) actionnable, permettant d'engendrer un déplacement discret dudit marqueur auxiliaire d'objet (M2), objet sensible (OS) par objet sensible (OS), sur une fenêtre interactive (F) ; et
▪ au moins un élément de validation (11E) actionnable, permettant de valider l'un desdits objets sensibles (OS), qui est muni dudit marqueur auxiliaire d'objet (M2), de manière à faire exécuter la fonction associée audit objet sensible (OS) ; et
- ledit dispositif de commande de curseur (5, 12) et lesdits moyens de commande auxiliaires (8) sont formés de sorte que :
▪ un objet sensible (OS) d'une fenêtre interactive (F) qui est muni du marqueur auxiliaire d'objet (M2) peut être validé par l'intermédiaire de l'élément de validation (11E) desdits moyens de commande auxiliaires (8) et la fonction qui lui est associée peut donc être exécutée, si le marqueur d'objet principal (M1) ne se trouve pas sur cette fenêtre interactive (F) ; et
▪lorsque le marqueur principal d'objet (M1) est amené sur une fenêtre interactive (F) sur laquelle se trouve le marqueur auxiliaire d'objet (M2), la commande du marqueur principal d'objet (M1), engendrée par ledit dispositif de commande de curseur (5, 12), est prioritaire par rapport à la commande du marqueur auxiliaire d'objet (M2), engendrée par lesdits moyens de commande auxiliaires (8), de sorte que le marqueur auxiliaire d'objet (M2) disparaît.

2. Dispositif selon la revendication 1,
**caractérisé en ce que** lesdits éléments de déplacement et de validation des moyens de commande auxiliaires (8) sont des touches (11A, 11B, 11C, 11D, 11E) d'un boîtier spécifique.

3. Dispositif selon la revendication 1,
**caractérisé en ce qu'**il comporte de plus un clavier (10) permettant audit opérateur d'entrer des données, et **en ce que** lesdits éléments de déplacement et de validation des moyens de commande auxiliaires (8) sont des touches (11) dudit clavier (10).

4. Dispositif selon l'une des revendications 1 à 3,
**caractérisé en ce que** lesdits objets sensibles (OS) sont agencés selon au moins une direction déterminée sur ladite fenêtre interactive (F) et **en ce que** lesdits moyens de commande auxiliaires (8) comportent au moins un élément de déplacement qui correspond à une flèche de direction (11A, 118) permettant de déplacer le marqueur auxiliaire d'objet (M2) d'un objet sensible (OS) à un autre, objet sensible (OS) après objet sensible (OS), suivant ladite direction déterminée selon un sens choisi.

5. Dispositif selon l'une quelconque des revendications 1 à 4, **caractérisé en ce que** ledit dispositif de commande de curseur (5, 12) engendre un déplacement continu du curseur (CU) sur une fenêtre interactive (F).

6. Dispositif selon l'une quelconque des revendications 1 à 4, **caractérisé en ce que** ledit dispositif de commande de curseur (5, 12) engendre un déplacement discret du curseur (CU) sur une fenêtre interactive (F).

7. Dispositif selon les revendications 3 et 6,
**caractérisé en ce que** ledit dispositif de commande de curseur (5, 12) comprend une partie des touches (11) dudit clavier (10).

8. Dispositif selon l'une quelconque des revendications précédentes,
**caractérisé en ce qu'**il comporte deux dispositifs de commande de curseur (5, 12) qui sont agencés de manière à pouvoir être actionnés tous les deux par ledit opérateur, l'un desdits dispositifs de commande de curseur engendrant un déplacement continu du curseur (CU) et l'autre un déplacement discret dudit curseur (CU).

9. Dispositif selon l'une quelconque des revendications précédentes,
**caractérisé en ce que** ledit dispositif de commande de curseur (5, 12) comporte un moyen pour déplacer le curseur (CU) de fenêtre interactive (F) à fenêtre interactive (F).

10. Dispositif selon l'une quelconque des revendications précédentes,
**caractérisé en ce qu'**il comporte au moins deux écrans (E1 à E8) et **en ce que** ledit dispositif de commande de curseur (5, 12) comporte un moyen pour déplacer le curseur (CU) d'écran à écran.

11. Dispositif selon l'une quelconque des revendications précédentes,
**caractérisé en ce qu'**il comporte deux dispositifs de commande de curseur (5, 12) et deux ensembles de moyens de commande auxiliaires (8), un dispositif de commande de curseur (5, 12) et un ensemble de moyens de commande auxiliaires (8) étant destinés au pilote de l'aéronef, et l'autre dispositif de commande de curseur (5, 12) et l'autre ensemble de moyens de commande auxiliaires (8) étant destinés au copilote de l'aéronef.

12. Système d'aéronef,
**caractérisé en ce qu'**il comporte un dispositif de dialogue (1) tel que celui spécifié sous l'une quelconque des revendications 1 à 11, pour permettre un dialogue entre ledit système et un opérateur dudit aéronef.

## Patentansprüche

1. Vorrichtung zum Kommunizieren zwischen mindestens einem Bediener eines Flugzeugs und mindestens einem System des Flugzeugs, wobei die Vorrichtung zum Kommunizieren (1) Folgendes beinhaltet:
- mindestens einen Bildschirm (E1 bis E8), der mindestens zwei sensible Objekte (OS) anzeigen kann, wobei jedes der sensiblen Objekte (OS) mit einer aus einer Vielzahl von Funktionen assoziiert ist, wobei die Funktionen von der Vorrichtung zum Kommunizieren (1) unter der Einwirkung des Bedieners in Hinblick auf ihre Ausführung ausgelöst werden können, wobei der Bildschirm (E1 bis E8) mindestens zwei sensible Objekte (OS) in mindestens zwei interaktiven Fenstern (F) anzeigen kann; und
- mindestens eine Cursorsteuervorrichtung (5, 12), die derart eingerichtet ist, um von dem Bediener betätigt werden zu können, und die mindestens Folgendes umfasst:
• ein betätigbares Verlagerungsmittel, das einen Cursor (CU) in einem interaktiven Fenster (F) derart verlagern kann, um ein sensibles Objekt (OS) zu bezeichnen, indem ein Objekthauptmarker (M1) eingeblendet wird; und
• ein betätigbares Validierungsmittel, das ein sensibles Objekt (OS), das mit dem Objekthauptmarker (M1) versehen ist, derart validieren kann, um die Funktion, die mit dem sensiblen Objekt (OS) assoziiert wird, ausführen zu lassen,
**dadurch gekennzeichnet, dass**:
- die Vorrichtung weiter Hilfssteuermittel (8) beinhaltet, die derart eingerichtet sind, um ebenfalls von dem Bediener betätigt werden zu können, die dazu bestimmt sind, einen Objekthilfsmarker (M2) zu steuern, ohne auf die Steuerung des Objekthauptmarkers (M1) einzuwirken, und die Folgendes umfassen:
• mindestens ein betätigbares Verlagerungselement (11A bis 11C), das es erlaubt, eine diskrete Verlagerung des Objekthilfsmarkers (M2), sensibles Objekt (OS) für sensibles Objekt (OS) in einem interaktiven Fenster (F) zu bewirken; und
• mindestens ein betätigbares Validierungselement (11E), das es erlaubt, eines der sensiblen Objekte (OS), das mit dem Objekthilfsmarker (M2) versehen ist, derart zu validieren, um die mit dem sensiblen Objekt (OS) assoziierte Funktion ausführen zu lassen; und
- wobei die Cursorsteuervorrichtung (5, 12) und die Hilfssteuermittel (8) derart gebildet sind, um:
• ein sensibles Objekt (OS) eines interaktiven Fensters (F), das mit dem Objekthilfsmarker (M2) versehen ist, über das Validierungselement (11E) der Hilfssteuermittel (8) validieren zu können, und die Funktion, die mit ihm assoziiert ist, daher ausführen zu können, falls sich der Objekthauptmarker (M1) nicht in diesem interaktiven Fenster (F) befindet; und
• wenn der Objekthauptmarker (M1) in ein interaktives Fenster (F) gebracht wird, in dem sich der Objekthilfsmarker (M2) befindet, die Steuerung des Objekthauptmarkers (M1), auf dem sich der Objekthilfsmarker (M2) befindet, die von der Cursorsteuervorrichtung (5, 12) bewirkt wird, in Bezug auf die Steuerung des Objekthilfsmarkers (M2), die von den Hilfssteuermitteln (8) bewirkt wird, derart prioritär ist, dass der Objekthilfsmarker (M2) verschwindet.

2. Vorrichtung nach Anspruch 1,
**dadurch gekennzeichnet, dass** die Verlagerungs- und Validierungselemente der Hilfssteuermittel (8) Tasten (11A, 11B, 11C, 11D, 11E) eines spezifischen Gehäuses sind.

3. Vorrichtung nach Anspruch 1,
**dadurch gekennzeichnet, dass** sie weiter eine Tastatur (10) beinhaltet, die es dem Bediener erlaubt, Daten einzugeben, und dadurch, dass die Verlagerungs- und Validierungselemente der Hilfssteuermittel (8) Tasten (11) der Tastatur (10) sind.

4. Vorrichtung nach einem der Ansprüche 1 bis 3,
**dadurch gekennzeichnet, dass** die sensiblen Objekte (OS) entlang mindestens einer Richtung eingerichtet sind, die in dem interaktiven Fenster (F) festgelegt ist, und dadurch, dass die Hilfssteuermittel (8) mindestens ein Verlagerungselement beinhalten, das einem Richtungspfeil (11A, 11B) entspricht, der es erlaubt, den Objekthilfsmarker (M2) von einem sensiblen Objekt (OS), sensibles Objekt (OS) für sensibles Objekt (OS), zum anderen, entlang der festgelegten Richtung gemäß einer ausgewählten Laufrichtung zu verlagern.

5. Vorrichtung nach einem der Ansprüche 1 bis 4,
**dadurch gekennzeichnet, dass** die Cursorsteuervorrichtung (5, 12) eine kontinuierliche Verlagerung des Cursors (CU) in einem interaktiven Fenster (F) bewirkt.

6. Vorrichtung nach einem der Ansprüche 1 bis 4,
**dadurch gekennzeichnet, dass** die Cursorsteuervorrichtung (5, 12) eine diskrete Verlagerung des Cursors (CU) in einem interaktiven Fenster (F) bewirkt.

7. Vorrichtung nach den Ansprüchen 3 und 6,
**dadurch gekennzeichnet, dass** die Cursorsteuervorrichtung (5, 12) einen Teil der Tasten (11) der Tastatur (10) umfasst.

8. Vorrichtung nach einem der vorstehenden Ansprüche,
**dadurch gekennzeichnet, dass** sie zwei Cursorsteuervorrichtungen (5, 12) beinhaltet, die derart eingerichtet sind, um beide von dem Bediener betätigt werden zu können, wobei eine der Cursorsteuervorrichtungen eine kontinuierliche Verlagerung des Cursors (CU), und die andere eine diskrete Verlagerung des Cursors (CU) bewirkt.

9. Vorrichtung nach einem der vorstehenden Ansprüche,
**dadurch gekennzeichnet, dass** die Cursorsteuervorrichtung (5, 12) ein Mittel zum Verlagern des Cursors (CU) von interaktivem Fenster (F) zu interaktivem Fenster (F) beinhaltet.

10. Vorrichtung nach einem der vorstehenden Ansprüche,
**dadurch gekennzeichnet, dass** sie mindestens zwei Bildschirme (E1 bis E8) beinhaltet, und dadurch, dass die Cursorsteuervorrichtung (5, 12) ein Mittel zum Verlagern des Cursors (CU) von Bildschirm zu Bildschirm beinhaltet.

11. Vorrichtung nach einem der vorstehenden Ansprüche,
**dadurch gekennzeichnet, dass** sie zwei Cursorsteuervorrichtungen (5, 12) und zwei Einheiten von Hilfssteuermitteln (8) beinhaltet, wobei eine Cursorsteuervorrichtung (5, 12) und eine Einheit von Hilfssteuermitteln (8) für den Piloten des Flugzeugs bestimmt sind, und die andere Cursorsteuervorrichtung (5, 12) und die andere Einheit von Hilfssteuermitteln (8) für den Copiloten des Flugzeugs bestimmt sind.

12. Flugzeugsystem,
**dadurch gekennzeichnet, dass** es eine Vorrichtung zum Kommunizieren (1) nach einem der Ansprüche 1 bis 11 beinhaltet, um eine Kommunikation zwischen dem System und einem Bediener des Flugzeugs zu erlauben.

## Claims

1. Device for dialog between at least one operator of an aircraft and at least one system of said aircraft, said device for dialog (1) including:
- at least one screen (E1 to E8) which is capable of displaying at least two responsive objects (OS), each of said responsive objects (OS) being associated with one of multiple functions, said functions being capable of being initiated by said device for dialog (1) under the action of the operator so that they are executed; said screen (E1 to E8) being capable to display at least two responsive objects (OS) on at least two interactive windows (F); and
- at least one cursor control device (5, 12) which is arranged so that it can be actuated by said operator, and which includes at least:
• one actuatable displacement means, which is capable of displacing a cursor (CU) on an interactive window (F), in order to designate a responsive object (OS) by making a main object marker (M1) appear; and
• one actuatable confirmation means, which is capable of confirming a responsive object (OS) which has said main object marker (M1), in order to initiate execution of the function which is associated with said responsive object (OS),
**characterized in that**:
- the device includes, additionally, auxiliary control means (8) which are arranged in such a way that they can also be actuated by said operator, which are intended to control an auxiliary object marker (M2) without affecting control of said main object marker (M1), and which include:
- at least one actuatable displacement element (11A to 11C), making it possible to cause a discrete displacement of said auxiliary object marker (M2), responsive object (OS) by responsive object (OS), on an interactive window (F); and
- at least one actuatable confirmation element (11E), making it possible to confirm one of said responsive objects (OS) which has said auxiliary object marker (M2), in order to initiate execution of the function which is associated with said responsive object (OS); and
- said cursor control device (5, 12) and said auxiliary control means (8) are formed such that:
• a responsive object (OS) of an interactive window (F) which has the auxiliary object marker (M2) can be confirmed through the confirmation element (11E) of said auxiliary control means (8) and the function which is associated to it can then be executed, if the main object marker (M1) is not on this interactive window (F); and
• when the main object marker (M1) is displaced on an interactive window (F) on which is the auxiliary object marker (M2), the control of the main object marker (M1) by said cursor control device (5, 12) has priority over the control of the auxiliary object marker (M2) by said auxiliary control means (8) such that the auxiliary object marker (M2) disappears.

2. Device as claimed in claim 1,
**characterized in that** said displacement and confirmation elements of the auxiliary control means (8) are keys (11A, 11B, 11C, 11D, 11E) of a specific box.

3. Device as claimed in claim 1,
**characterized in that** it includes, additionally, a keyboard (10) to enable said operator to enter data, and **in that** said displacement and confirmation elements of the auxiliary control means (8) are keys (11) of said keyboard (10).

4. Device as claimed in one of claims 1 to 3, **characterized in that** said responsive objects (OS) are arranged according to at least one direction which is defined on said interactive window (F), and **in that** said auxiliary control means (8) include at least one displacement element which corresponds to a direction arrow (11A, 11B) which makes it possible to displace the auxiliary object marker (M2) from one responsive object (OS) to another, responsive object (OS) after responsive object (OS), in said defined direction in a chosen sense.

5. Device as claimed in any one of claims 1 to 4, **characterized in that** said cursor control device (5, 12) causes continuous displacement of the cursor (CU) on an interactive window (F).

6. Device as claimed in any one of claims 1 to 4, **characterized in that** said cursor control device (5, 12) causes a discrete displacement of the cursor (CU) on an interactive window (F).

7. Device as claimed in claims 3 and 6,
**characterized in that** said cursor control device (5, 12) includes some of the keys (11) of said keyboard (10).

8. Device as claimed in any one of the preceding claims,
**characterized in that** it includes two cursor control devices (5, 12) which are arranged in such a way that they can both be actuated by said operator, one of said cursor control devices causing continuous displacement of the cursor (CU) and the other causing discrete displacement of said cursor (CU).

9. Device as claimed in any one of the preceding claims,
**characterized in that** said cursor control device (5, 12) includes a means for displacing the cursor (CU) from interactive window (F) to interactive window (F).

10. Device as claimed in any one of the preceding claims,
**characterized in that** it includes at least two screens (E1 to E8) and **in that** said cursor control device (5, 12) includes a means for displacing the cursor (CU) from screen to screen.

11. Device as claimed in any one of the preceding claims,
**characterized in that** it includes two cursor control devices (5, 12) and two sets of auxiliary control means (8), one cursor control means (5, 12) and one set of auxiliary control means (8) being intended for the pilot of the aircraft, and the other cursor control device (5, 12) and the other set of auxiliary control means (8) being intended for the copilot of the aircraft.

12. Aircraft system,
which includes a device for dialog (1) as specified in any one of claims 1 to 11, to allow a dialog between said system and an operator of said aircraft.
